# EUROPEAN PATENT APPLICATION

(11) **EP 0 733 492 A1**
(43) Date of publication of application: **25.09.1996**
(21) Application number: 96301934.4
(22) Date of filing: 21.03.1996
(51) Int. Cl.: B44C 5/00, B44C 1/10

(54) **Decorative tape for artistic use**

(30) Priority: 24.03.1995 GB 9506042
(71) Applicant: SELECTUS LIMITED, Stoke-on-Trent ST8 7RH (GB)
(72) Inventor: Curry, David, Petersham 2049, New South Wales (AU)
(74) Representative: Freeman, Jacqueline Carol

(57) **Abstract**

A tape (1) for decorative and reinforcing purposes in craft and artistic applications, the tape having a surface comprising a surface decoration, pattern, shape or configuration and incorporating a bendable rod or wire (6) extending lengthwise along the tape.

Preferably the wire extends generally along the centre line of the tape. The wire may be of thin extruded metal, such as copper, or of bendable plastics material and could be woven or stitched into the tape.

Self-adhesive may be applied to the tape on the other side to the surface decoration, for example in two strips (4) either side of the wire. This is covered with paper or foil (5) which is peeled off when the tape is to be used.

The tape, which may be woven fabric or plastic or foil is stored in a roll in a dispensing container.

## Description

The present invention relates to a tape and specifically to a tape for use in arts and crafts, as an edging trim.

Traditionally tape is made of fabric woven into a ribbon form. One of many possible uses would be as a decorative or reinforcing finish to fabric or paper artifacts particularly at the peripheral edges. It will usually be attached by stitching or by glue.

Decorative finishes such as plain, patterned, lace, glitter or sequins are readily available.

However a problem arises to make decorations out of such trimmed fabric: for example to make bows. complex gluing and stitching procedures are needed to shape an edged piece of fabric into a fixed box. Thin pieces of craft wire can be used to provide a sculpturing medium but this is difficult to attach effectively and permanently.

The present invention aims to provide an advantageous tape with many applications.

According to the present invention there is provided a tape for decorative and reinforcing purposes in craft and artistic applications, the tape having a surface comprising a surface decoration, pattern, shape or configuration and incorporating a bendable rod or wire extending lengthwise along the tape substantially along the centre line thereof.

However, attachment of such tape can be a problem. If it is stitched onto fabric, this is time consuming and visible machine stitches may be unacceptable to the application in hand whereas more invisible hand stitching may be too time consuming and impractical - for example if the tape is to be attached by young children in school craft classes, or by disabled or older people in therapy classes.

Glue on the other hand can be very messy and unsightly if it is not applied accurately.

Hence, preferably, the inventive tape has a second surface having at least one strip, and preferably two colinear strips, of adhesive medium.

In a preferred embodiment the rod or wire is of thin extruded metal, for example copper, or steel. It could however be made of a synthetic material such as a deformable, substantially non-resilient, plastic. A plurality of wires or bendable rods can be incorporated to run in parallel in the tape. They may be woven into the tape or applied by bonding with adhesive, by welding or by stitching, e.g. over-locking stitch.

The tape material may be fabric, such as woven ribbon. Alternative embodiments include a strip of fabric cut or slit from a wider piece of fabric or a strip of pliable plastic, or foil or paper. Any relatively thin, pliable material would be suitable and obviously a wide variety of finishes can be achieved.

One side of the tape is preferably provided with adhesive, preferably in two parallel strips extending along the length of the tape, for example on either side of the wire. In the stored condition the adhesive may be covered by paper or a thin film of plastic or other suitable backing material to prevent unintended adhesion of the tape.

The tape could thus be conveniently stored in rolled form and for example in a box with a narrow dispensing opening to allow a required length to be pulled off the roll for sale or use.

For a better understanding of the present invention and to show how the same may be carried into effect, reference will now be made to the accompanying drawings in which:
Fig. 1 is a schematic view of a length of tape according to the present invention; and
Fig. 2 illustrates the tape of Fig. 1 in one application.

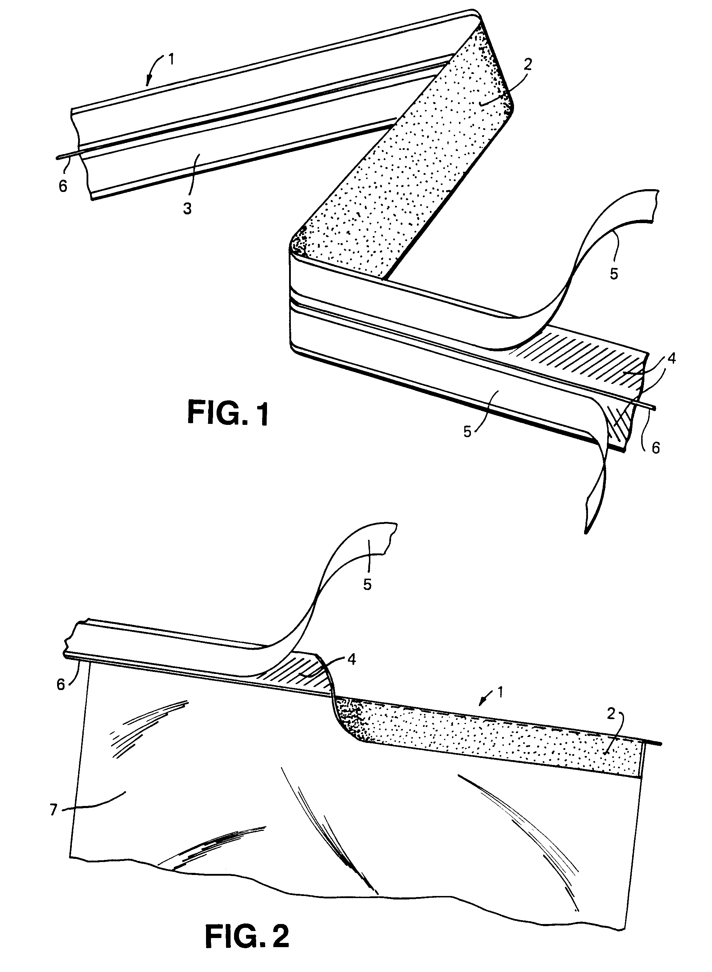

In the Figures, the tape is generally indicated at 1. Fig. 1 shows a length of this tape which has a decorated front side 2 and a rear side 3. On the rear side are located two parallel adhesive strips 4 which are protected by covering paper strips 5. A thin wire 6 is woven into the fabric of the tape. Alternatively of course it may be attached by over-locking stitch or by some other adhesion means.

The decorative surface 2 may be adorned with embroidery, glitter, sequins, or a decorative pattern may be woven into the material. Alternatively, the tape may be made undecorated in a plain or neutral colour.

In use the tape may be attached to the edge of fabric, ribbon, thin card, paper or foil. The fabric or other material is placed right-side down onto one adhesive strip 4 of the tape 1 so that the edge of the fabric is level with the centre of the tape, i.e. in line with the wire 6. Obviously the backing tape 5 must be removed and the tape is pressed onto the material. Subsequently the tape is folded over the edge of the fabric to secure the wire at the edge of the fabric. The second strip of backing tape 5 is removed and the tape thus forms a reinforcing binding for the edge of the fabric which because of the centre wire 6 allows the fabric to be easily fashioned by hand into any of a variety of sculptured effects. For example, bows and fabric flowers can be made easily out of any fabric: decorative furnishing bows can be made to match curtain fabric. Bows or other hat decorations can easily be fashioned from fabric to match an outfit: for wedding outfits or bridal accessories.

Fig. 2 illustrates a length of tape 1 with a decorative surface pattern 2 partly applied to one edge of fabric piece 7.

Although self-adhesive tape according to the invention is more convenient for the user, it is within the scope of this invention to provide wired tape which can be stitched onto the peripheral region of a piece of fabric to provide a reinforced bendable edge.

Tape according to the invention can alternatively be attached to fabric away from the peripheral sides to create particular effects. It could also be used to bind two or more pieces of material together if the adhesive is strong enough for the application.

## Claims

1. A tape for decorative and reinforcing purposes in craft and artistic applications, the tape having a first surface comprising a surface decoration, pattern, shape or configuration and incorporating a bendable rod or wire extending lengthwise along the tape, within a body region of the tape so that the tape can be folded lengthwise to produce a folded tape with the wire at or substantially close to, the edge thereof.

2. A tape as claimed in claim 1, wherein the bendable rod or wire extends substantially along the centre line of the tape.

3. A tape as claimed in claim 1 or 2 comprising a second surface on the opposite side of the tape to the first surface and having at least one strip of adhesive medium extending lengthwise of the tape on the second surface.

4. A tape as claimed in claim 3, comprising two substantially parallel strips of adhesive medium extending lengthwise of the tape on the second surface, one arranged on each side of the rod or wire.

5. A tape as claimed in claim 3 or 4, wherein the adhesive is instantly adhesible and is covered in a stored condition of the tape with a strip of non-adhesible material.

6. A tape as claimed in claim 5, wherein the non-adhesible material is paper.

7. A tape as claimed in claim 5, wherein the non-adhesible material is a thin film of plastics material.

8. A tape as claimed in any preceding claim wherein the rod or wire comprises thin extruded metal.

9. A tape as claimed in claim 8, wherein the metal is copper.

10. A tape as claimed in claim 8, wherein the metal is steel.

11. A tape as claimed in any preceding claim, wherein the rod or wire comprises a synthetic material.

12. A tape as claimed in claim 11, wherein the synthetic material is a deformable substantially non-resilient plastics material.

13. A tape as claimed in any preceding claim comprising a plurality of substantially parallel rods or wires.

14. A tape as claimed in any preceding claim, wherein the rod or wire is woven into the tape.

15. A tape as claimed in any of claims 1 to 14, wherein the rod or wire is stitched onto the tape.

16. A tape as claimed in any of claims 1 to 14, wherein the rod or wire is welded to the tape.

17. A tape as claimed in any preceding claim, wherein the tape comprises a woven fabric.

18. A tape as claimed in claims 1 to 16, wherein the tape comprises a pliable plastics material.

19. A tape as claimed in claims 1 to 16, wherein the tape comprises a foil material

20. A tape as claimed in claims 1 to 16, wherein the tape comprises paper.

21. A tape for decorative and reinforcing purposes in craft and artistic applications substantially as hereinbefore described with reference to the accompanying figures.
